# EUROPEAN PATENT SPECIFICATION

(11) **EP 3 595 106 B1**
(45) Date of publication and mention of the grant of the patent: **17.02.2021**
(21) Application number: 18182599.3
(22) Date of filing: 10.07.2018
(51) Int. Cl.: H02G 3/04

(54) **CABLE DUCT**
KABELKANAL
CONDUIT DE CÂBLE

(43) Date of publication of application: 15.01.2020
(73) Proprietor: Robert Bosch GmbH, 70442 Stuttgart (DE); ProfilGruppen Extrusions AB, 36421 Åseda (SE)
(72) Inventor: Hultinsson, Jan Claes Ingvar, 57476 Korsberga (SE); Willi, Marco, 71726 Benningen Am Neckar (DE); Thimmappa, Manjunatha, 70435 Stuttgart (DE)

(56) References cited:
- EP-A2- 0 200 927
- US-A- 5 949 025
- US-A- 6 107 575
- US-B1- 6 437 244

## Description

### Technical Field

The present invention relates to a cable duct according to the preamble of claim 1.

### Background Art

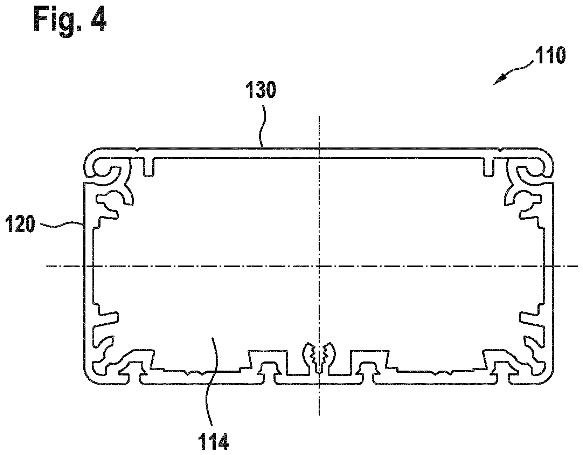

A cable duct (also called a cable conduit) is a mechanical structure for guiding and protecting cables, such as guiding and protecting electrical cables in industrial applications. A conventional cable duct is shown in section view in Fig. 4. The cable duct 110 is a structure of constant section that forms a receiving space 114 for receiving cabling (not shown). To allow installation and removal of the cabling a side of the cable duct is configured as a removable cover 130, with the remaining sides configured as a base member 120. The cover 130 is attachable to the base member by a form-locking fit (e.g. snap fit). The base member 120 and/or the cover 130 are resiliently deformable. The cover can be attached/removed by applying a (manual) opening or closing force which temporarily deforms the base member 120 and/or the cover 130 to release the form-locking fit. Cable ducts with multi-piece covers are known from US6437244B1 and US5949025A.

It is an object of the invention to provide a way to open and close the cable duct with greater ease and reliability. It is a further object to provide a cable duct that is more robust.

### Summary of the Invention

The objects are achieved by the subject-matter of claim 1. Advantageous further developments are subject-matter of the dependent claims.

A cable duct comprises a base member and a cover, wherein the base member has a cross-sectional form, the cross-sectional form extending along a longitudinal axis and forming a first and a second free end spaced apart from each other, the base member having a constant cross section perpendicular to the longitudinal axis; the cover is attachable to the base member so that the cable duct forms a receiving space when viewed in cross-section; the cover comprises a first engaging portion configured to engage with the first free end, and a second engaging portion configured to engage with the second free end; and the cover further comprises: a first cover part on which the first engaging portion is arranged, a second cover part on which the second engaging portion is arranged, the first and second cover parts engaging with each other in an overlapping manner, and at least one urging member, so that the cover is provided as a multi-piece cover with separate urging member, which urges the first and second cover parts with respect to each other when the first engaging portion is engaged or brought into engagement with the first free end and simultaneously the second engaging portion is engaged or brought into engagement with the second free end.

In other words the cover is configured as separate parts which can be urged together or apart. So the cover can be attached (by e.g. frictional and/or form-locking fit) to the base member under urging. The cover can be more reliably attached to the base member compared to a comparative example where the base member and/or the single piece cover deforms to close the cable duct. In the comparative example the engagement is dependent on the deformability of the cover and/or the base member. On the other hand the present cable duct can be more flexibly executed via the sizing and material choice of only the urging member. Various opening forces and cable duct sizes are achievable. The cable duct can be configured more robustly.

It may be provided that the first engaging portion is engageable with the first free end so that the cover is pivotable about a first pivot axis, and/or the second engaging portion is engageable with the second free end so that the cover is pivotable about a second pivot axis. In other words an engaging portion can cooperate with a free end to provide a hinge-like guidance over an angular range. The closure of the cable duct is facilitated. The constraints of two pivot axes ensures secure attachment of the cover when closed.

It may be provided that the pivot axes are parallel to each other and/or extend along the longitudinal axis.

It may be provided that the first free end comprises a first groove that is arc-shaped, and the first engaging portion comprises an arc-shaped projection, which may preferably form a plate-like section, corresponding to the first groove so as to be pivotably engageable therewith. In other words the arc-shaped projection is slidably guided inside the groove; the cover is pivotable through a simple design. The arc features are easily formed e.g. by extrusion.

It may be provided that the second free end comprises a second groove that is arc-shaped, and the second engaging portion comprises an arc-shaped projection, which may preferably form a plate-like section, corresponding to the second groove so as to be pivotably engageable therewith.

Any of the grooves and the arc-shaped projections may preferably be arc-shaped when viewed in cross-section. Any groove may preferably have an arc axis coinciding with a pivot axis.

It may be provided that at least one groove, preferably both grooves, has/have constant width. Alternatively or in addition it may be provided that at least one arc-shaped projection, preferably both arc-shaped projections, has/have constant thickness. Constant (width and/or thickness) is understood here to mean unvarying along the longitudinal axis and optionally also in the circumferential direction of the arc. In other words dimensions of the arc-shaped projections and grooves may be constant along the longitudinal axis which facilitates manufacture especially by extrusion.

It may be provided that any or all of the base member, the first cover part, and the second cover part have a constant section, for example with respect to the longitudinal axis. Thus manufacture especially by extrusion is further facilitated.

It may be provided that any or all of the base member, the first cover part, and the second cover part comprises a resilient material such as aluminium. Alternatively or in addition any or all of these members may be made by extrusion. Alternatively or in addition the base member may be formed from a single piece.

It may be provided that at least one urging member is provided as an elastic element. In other words the urging member may be a type of biasing means that can provide a biasing force under elastic compression.

At least one urging member may be provided as a (preferably elastic) cord. Thus the urging is generated using a simple design. Preferably the chord may have a constant section along its (entire) length in the unstressed state. Preferably the constant section may comprise a circle when unstressed.

It may be provided that the cord extends along the longitudinal axis, preferably over an entire longitudinal extent of the cover. In either case a sealing to hinder ingress of dirt etc., into the receiving space is facilitated.

It may be provided that a straight line passing through the engaging portions intersects the urging member. Thus bending loads derived from the urging are reduced so reliability is improved.

It may be provided that the first and second cover parts are relatively slidable along a sliding axis perpendicular to the longitudinal axis. Therefore the first engaging portions can move towards and away from each other in a simple way.

It may be provided that the first cover part comprises at least one first hook-like portion when viewed in cross-section, the second cover part comprises at least one second hook-like portion when viewed in cross-section, and corresponding first and second hook-like portions can engage with each other so that the first and second cover parts are relatively slidably guided along a sliding axis which is perpendicular to the longitudinal axis.

In other words the pair of hook-like portions can couple the first and second cover parts; the first and second cover parts can relatively slide by means of the hook-like portions coming into increasing and decreasing engagement. Thus the hook-like portions also provide a strengthening and stiffening effect to the cover.

Preferably the hook-like portions may each have a respective straight/planar mating surface. Alternatively or in addition when the cable duct is closed the sliding axis may be parallel to a transverse axis perpendicularly joining the pivot axes.

It may be provided that at least one urging member is arranged between a corresponding pair of first and second hook-like portions. Thus the urging member is provided by means of already-present features. The arrangement particularly effectively seals between the first and the second cover parts.

Preferably the urging force of at least one urging member may be configured to increase with increasing engagement of at least one pair of corresponding hook-like portions.

It may be provided that a first or a second hook-like portion comprises a third free end which is configured to be thickened, preferably thickened with respect to the rest of the respective hook-like portion, and at least one urging member rests on the third free end. In other words the hook-like portion can bear on the urging member with a large area of contact. Wear is reduced and a more robust arrangement is achieved.

It may be provided that one of the first and second cover parts comprises an impinging end, as a fourth free end, which engages with a holding recess of the other of the first and second cover parts, the holding recess has a holding protrusion, and the impinging end is configured to bear on the holding protrusion. Thus a robust coupling of the first and second cover parts is further ensured.

Preferably the impinging end may be configured to bear on the protrusion from within the holding recess.

When the impinging end is provided at a distal end of the one of the first and second cover parts the assembly of the components of the cover is facilitated. Alternatively or in addition the protrusion may project in parallel to the sliding axis.

It may be provided that the hook-like portions are formed so that they limit the extent of relative sliding of the first and second cover parts in a first direction. Alternatively or in addition the impinging end and the holding recess may be formed so that they limit the extent of relative sliding of the first and second cover parts in a second direction opposite to the first direction. By limiting the extent of sliding (e.g. to a predetermined range) the opening/closing operation is more reliable and an unintended disassembly is less likely.

It may be provided that when viewed in cross-section the holding recess is provided with a step in the region of the holding protrusion, said step forming a first and a second restraining portion, the restraining portions are relatively offset with respect to a third axis, and the impinging end can be brought into engagement with the first restraining portion and with the second restraining portion.

Therefore the step can provide a transitory (change in) resistance to the relative sliding of the first and second cover parts as the impinging end changes engagement from one restraining portion to the other restraining portion. Distinct sliding positions are achieved.

It may be provided that the third axis is perpendicular to both the longitudinal axis and the sliding axis.

It may be provided that sliding the cover portions can cause a change between an engagement of the impinging end with the first restraining portion and an engagement of the impinging end with the second restraining portion.

It may be provided that the hook-like portions can be brought into respective engagement only when the impinging end lies on the second restraining portion with the impinging end preloaded. Thus during the assembly of the components of the cover the operator can generate the preload by urging the first and second cover parts so that they are temporarily coupled by friction and/or a form-locking fit between the impinging end and holding recess. The assembly of the cover is further facilitated. An unintended disassembly is further avoided.

It may be provided that the preload is at least partially released by relatively sliding the first and second cover parts so that the impinging end is brought into engagement with the first restraining portion. Therefore friction between the first and second cover parts under sliding is reduced so the opening/closing operation is even more reliable and an unintended disassembly of the components of the cover is even further avoided.

It is to be understood that the features indicated above and in the following can be applied not just in the combinations given but also in other combinations or alone, without departing from the present invention.

### Short Description of the Figures

A preferred embodiment is described in more detail in the following with the help of the appended figures, wherein:
Fig. 1 shows a cross-sectional view of the cable duct in an open position,
Fig. 2 shows a cross-sectional view of the cable duct in a closed position, and
Fig. 3 shows a cross-sectional view of the cover of the cable duct in a state of being assembled.
Fig. 4 shows a conventional cable duct in a cross-sectional view.

### Detailed Description of Embodiment

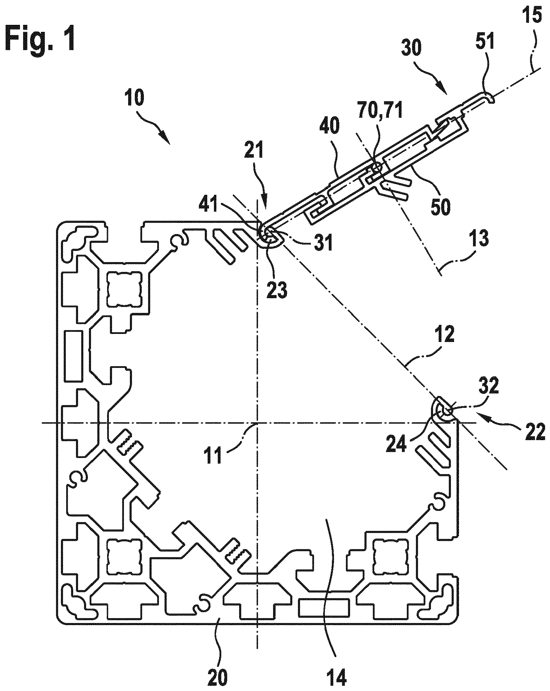

Fig. 1 is a cross-sectional view of a cable duct 10 in its open state. The cable duct 10 comprises a base member 20 and a removable cover 30 together defining a receiving space 14. The base member 20 has a constant cross-section perpendicular to the longitudinal axis 11 (which is into the page in the figures). The longitudinal extent of the base member 20 may be selected according to application, e.g. between 100 mm and 3000 mm. The base member 20 has a cavity and a first 21 and a second 22 free end. The free ends 21, 22 are spaced apart to form an opening.

The first and second free end 21, 22 comprises a first and second groove 23, 24 respectively. The grooves are formed with a respective arc shape when viewed in cross-section. The arcs are circular and each arc has an axis (hereinafter pivot axis 31, 32) parallel to the longitudinal axis 11. The width of each groove 23, 24 is constant along the longitudinal axis 11 and in the peripheral direction around the respective pivot axis 31, 32. Preferably the opening of each groove 23, 24 has rounded edges. A line joining the pivot axes 31, 32 is a transverse axis 12.

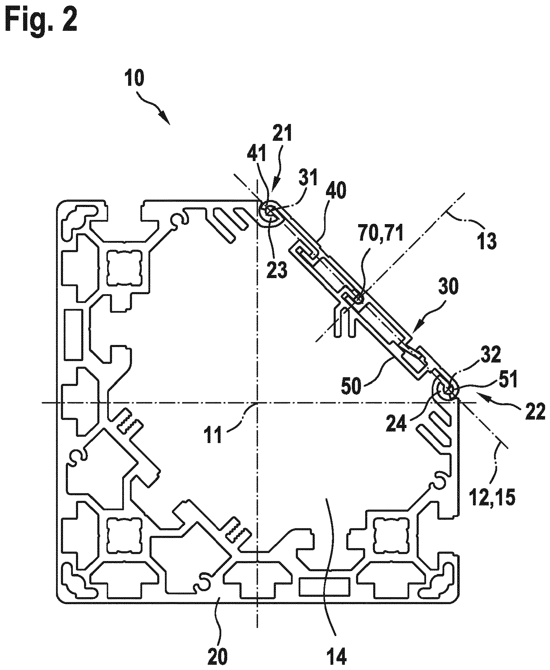

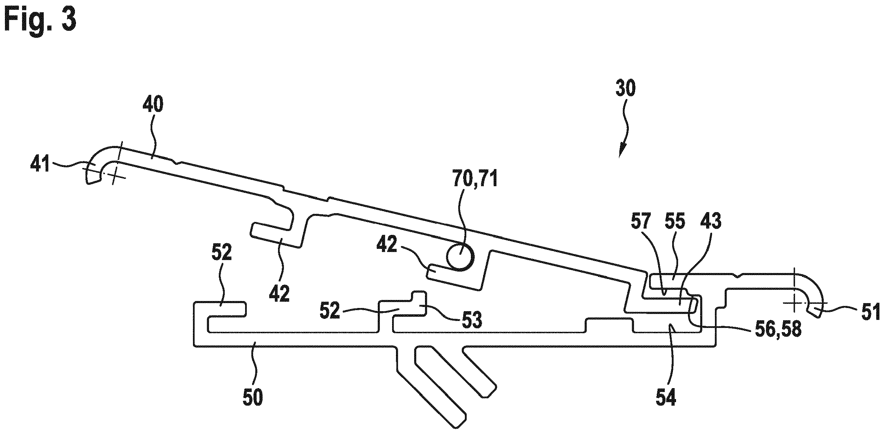

The cover 30 is shown in Fig. 3 in its partially assembled state, while its fully assembled state is visible in Figs. 1 and 2. The cover 30 is a multi-part piece having constant cross-section along the longitudinal axis 11. The cover 30 comprises a first cover part 40 and a second cover part 50 which engage with each other in an overlapping manner to form the main body of the cover 30. The assembled first and second cover parts 40, 50 are relatively slidable along a sliding axis 15 (shown in Figs. 1 and 2) which is perpendicular to the longitudinal axis 11 and coincides with the transverse axis when the cable duct 10 is closed (fig. 2).

The first and second cover part 40, 50 comprises a first and a second engaging portion 41, 51 respectively. Each engaging portion 41, 51 is formed as a respective first or second arc-shaped projection 41, 51, which is preferably formed as a plate-like section, when viewed in cross-section. The arcs are circular and each arc has an arc axis parallel to the longitudinal axis 11. The width of each arc-shaped projection 41, 51 is constant along the longitudinal axis 11 and in the peripheral direction around its respective arc axis, in correspondence with the grooves 23, 24 of the base member 20.

The first cover part 40 comprises two first hook-like portions 42 and the second cover part 50 comprises two second hook-like portions 52. The first and second cover parts 40, 50 are assembled under engagement of each first hook-like portion 42 with a corresponding second hook-like portion 52. Under sliding in one direction the hook-like portions 42, 52 in each corresponding pair move further into engagement. Under sliding in the opposite direction to the one direction these hook-like portions 42, 52 move further towards disengagement.

An urging member 70 comprises an elastic cord 71 which extends along the longitudinal axis 11 and is received by a first hook-like portion 42. As the pair of hook-like portions 42, 52 engage, the elastic cord 71 is compressed and urges the first and second arc-shaped projections 41, 51 together. The tip 53 (third free end) of a second hook-like portion 52 has an increased wall thickness so as to increase its surface area that bears on the elastic cord 71.

Optionally, further elastic cords may be provided at several pairs or all pairs of hook-like portions 42, 52. The elastic cord 71 is preferably a single piece and/or extends along the longitudinal axis 11 along the entire extent of the cover 30. In this way the cord 71 can act additionally as a seal against dirt, liquids etc. It is understood that when the cord is provided as a single piece, it is advantageous for it to be easily deformable. When the elastic cord 71 has circular cross-section in the unstressed state (e.g. O-ring cord) a configuration that is particularly easy to manufacture is achieved. With the cord 71 unloaded the distance between axes of the arc-shaped projections 41, 51 is preferably slightly less than the distance between the pivot axes 31, 32 of the first and second free ends 21, 22. In this way a snap fit/click fit is achieved.

The first cover part 40 has an essentially L-shaped impinging end 43. The second cover part 50 comprises a corresponding holding recess 54 for accommodating the impinging end 43. The holding recess 54 comprises a holding protrusion 55 on which the impinging end 43 can engage (e.g bear or grip). The impinging end 43 is slightly inclined to the sliding axis 15 measured when the first and second cover parts 40, 50 are aligned (i.e. when assembled).

A step 56 is provided on the inside of the holding recess 54 (on the inner surface of the holding protrusion 55). The step 56 forms a first and a second restraining portion 57, 58 forming parallel surfaces offset from each other with respect to a third axis 13 (being an axis perpendicular to both the longitudinal axis 11 and sliding axis 15) so that under sliding of the first and second cover parts 40, 50 the contact between the impinging end 43 and the holding protrusion 55 moves between the first 57 and the second 58 restraining portion.

Assembly of the cover is understood to mean assembly of the components of the cover to themselves , i.e. excluding any assembly to the base member. During assembly of the cover 30 the impinging end 43 is inserted in the holding recess 54 (which results in the state shown in Fig. 3) and the first and second cover parts 40, 50 are then urged together (e.g. by hand) which preloads the impinging end 43 and optionally the holding protrusion 55 (so the impinging end 43 and optionally the holding protrusion 55 are resiliently deformed). The hook-like portions 42, 52 are then brought into engagement by relative sliding of the now-parallel first and second cover parts 40, 50. At this time the contact between the impinging end 43 and the holding protrusion 55 moves from the second restraining portion 58 to the first restraining portion 57 which reduces the aforementioned preload. The cover 30 is thereby assembled.

Disassembly of the cover is understood to mean disassembly of the components of the cover from each other after any removal of the cover from the base member. The disassembly of the cover 30 is achieved through disengaging the hook-like portions 42, 52 which can only be done by sliding the impinging end 43 past the step 56 onto the second restraining portion 58 to increase the resilient deformation of the impinging end 43 and hence the level of preload. The increased force reduces the likelihood of an unintended disassembly of the first and second cover parts 40, 50. Furthermore the preloaded impinging end 43 will advantageously achieve an inclined and spring-like separation of the first and second cover parts 40, 50 which aids disassembly.

The relative movement of the first and second cover parts 40, 50 in one sliding direction is limited by the maximum engagement of the pairs of hook-like portions 42, 52. That is to say the movement is limited by hook-like portions 42, 52 coming to bear on each other and/or on the fully compressed elastic cord 71. The movement of the first and second cover parts 40, 50 in the opposite direction is limited by the impinging end 43 contacting an abutting face of the holding recess 54, such as the transition of the step 56 between the first and second restraining portions 57, 58.

Preferably a non-zero preload at the impinging end 43 is provided when the impinging end 43 bears on the first restraining portion 57. In this way any looseness due to clearances between the assembled first and second cover parts 40, 50 is removed. The impinging end 43 may be sized mainly in consideration of resilient deformability since the strength and stiffness of the cover generally is provided by the rest of the first cover part 40, and the second cover part 50.

Fig. 2 shows the cable duct 10 in the closed state. The cable duct 10 can be closed by first inserting the first arc-shaped projection 41 into the first groove 23. By doing so a temporary hinge between the cover 30 and base member 20 is achieved. At this stage the cover 30 is attached to the base member 20 but the cable duct 10 is still open, as shown in Fig. 1. Subsequently the cover 30 can be pivoted further to bring the second arc-shaped projection 51 to bear at the second free end 22. Pushing the cover 30 further (e.g. by hand) presses the second arc-shaped projection 51 against the opening of the second groove 24 which has rounded edges as described above. In this way a snap fit/ latching effect is achieved which can be released by sliding the first and second cover parts 40, 50 apart so as to temporarily compress the elastic cord 71. This can be achieved by inserting a corresponding tool between the first and second cover parts 40, 50, or by manually pushing or pulling on a suitable lip or handle (not shown).

A particularly effective latching is achieved because the cover 30 is restricted to pivoting about the first pivot axis 31, and to pivoting about the second pivot axis 32. With these two constraints set the cover 30 is fixed to the base member 20 in the closed position.

To further ensure fixing of the cover 30 a fixing means (not shown) such as a self-tapping screw can be provided to penetrate the cover 30 and fix in the base member 20.

By providing a multi-piece cover 30 with separate urging member 70 the urging force can be chosen in consideration of e.g. sealing and ergonomic requirements, and the base member 20 and first and second cover parts 40, 50 can be sized principally in consideration of strength.

Since pivot axes 31, 32 can be provided at either the first or second free end or both, usability is enhanced.

Alternatively to the disclosed embodiment the grooves may be provided on the cover, and arc-shaped projections may be provided on the base member. The features that create a pivoting engagement between the free ends and the engaging portions need not be arc-shaped but instead may be provided as simple pivot points. Furthermore advantages are provided even when there are no pivots. For example when the engaging portions engage with the free ends under mere biasing of an urging member, the cover can still be fixed to the base member, such as by form-locking fit, friction-locking fit, or a combination of fit types.

A latching effect is possible when the urging member 70 is biased to a first level when the cable duct 10 is closed, and optionally the urging member 70 may be biased to a second level higher than the first level, at a stage before closure.

In the disclosed embodiment sliding the first and second arc-shaped projections 41, 51 apart biases the urging member 70. It may instead be provided that sliding the first and second engaging portions together biases the urging member. In each case the engaging portions and free ends should be suitably adapted.

Manufacture is facilitated when any or all of the base member 20, first and second cover parts 40, 50, and urging member 70 are extruded parts, preferably comprising aluminium.

Instead of a substantially flat or planar subassembly, the cover may have a different shape, e.g. curved.

The cover may have one, two, or more than two pairs of corresponding hook-like portions which may have constant section along a longitudinal axis and/ or may comprise several hook-like sections distributed intermittently along the longitudinal axis.

The urging member need not have constant section along the longitudinal axis, but could for example be configured as at least one coil spring.

The urging member need not be interposed between two corresponding hook-like portions 42, 52. For example distinct features such as protrusions may be provided on the first and second cover parts for holding and bearing on the urging member.

A cable duct comprises a base member and a cover; wherein the base member extends with a constant section along a longitudinal axis; the sectional form of the base member forms a first and a second free end which are distanced from each other, the cover is fittable on the base member between the first and the second free end; the base member and the cover are formed so that they delimit together a receiving space when viewed in cross-section; a first and second groove is arranged at the first and second free end respectively, the first and second groove when viewed in cross-section runs in an arc shape around a first and second pivot axis respectively; the first and the second pivot axes are arranged parallel to the longitudinal axis; the cover comprises a first and a second arc-shaped plate-like portion which corresponds to the first and second groove respectively; the first and second plate-like portion can be brought into engagement with the first and second groove respectively, so that the cover is pivotable relative to the base member about the first and second axis; the cover is formed from a first and a second cover part; the first plate-like portion is arranged at the first cover part and the second plate-like portion is arranged at the second cover part; and at least one elastic element is arranged between the first and second cover parts, which elastic element is preloadable by the first and second plate-like portion being brought into engagement with the first and second groove respectively.

A cover for a cable duct comprises a first engaging portion and a second engaging portion separate from the first engaging portion, each extending in cross-section along a longitudinal axis; the first engaging portion and the second engaging portion are each configured to pivotably engage with a separate member; the cover comprises a first cover part on which the first engaging portion is arranged and a second cover part on which the second engaging portion is arranged, and the cover comprises an urging member which can be biased to relatively urge the first and second cover parts when both the engaging portions are engaged with the separate member to fix the cover to the separate member.

### Reference Signs

- 10, 110: cable duct
- 11: longitudinal axis
- 12: transverse axis
- 13: third axis
- 14, 114: receiving space
- 15: sliding axis
- 20, 120: base member
- 21: first free end
- 22: second free end
- 23: first groove
- 24: second groove
- 30, 130: cover
- 31: first pivot axis
- 32: second pivot axis
- 40: first cover part
- 41: first engaging portion (first arc-shaped projection)
- 42: first hook-like portion
- 43: impinging end (fourth free end)
- 50: second cover part
- 51: second engaging portion (second arc-shaped projection)
- 52: second hook-like portion
- 53: third free end
- 54: holding recess
- 55: holding protrusion
- 56: step
- 57: first restraining portion
- 58: second restraining portion
- 70: elastic element
- 71: cord

## Claims

1. Cable duct comprising a base member (20) and a cover (30), wherein
the base member (20) has a cross-sectional form, the cross-sectional form extending along a longitudinal axis (11) and forming a first and a second free end (21, 22) spaced apart from each other, the base member having a constant cross section perpendicular to the longitudinal axis,
the cover (30) is attachable to the base member (20) so that the cable duct forms a receiving space (14) when viewed in cross-section,
the cover (30) comprises a first engaging portion (41) configured to engage with the first free end (21), and a second engaging portion (51) configured to engage with the second free end (22), and
the cover (30) comprises:
a first cover part (40) on which the first engaging portion (41) is arranged; and
a second cover part (50) on which the second engaging portion (51) is arranged, the first and second cover parts engaging with each other in an overlapping manner, **characterized in that**
the cover (30) comprises at least one urging member (70), so that the cover is provided as a multi-piece cover with separate urging member, which urges the first and second cover parts (40, 50) with respect to each other when the first engaging portion (41) is engaged or brought into engagement with the first free end (21) and simultaneously the second engaging portion (51) is engaged or brought into engagement with the second free end (22).

2. Cable duct according to claim 1, wherein
the first engaging portion (41) is engageable with the first free end (21) so that the cover (30) is pivotable about a first pivot axis (31),
the second engaging portion (51) is engageable with the second free end (22) so that the cover (30) is pivotable about a second pivot axis (32), and
the first and second pivot axes (31, 32) extend along the longitudinal axis (11).

3. Cable duct according to claim 1 or 2, wherein
the at least one urging member (70) is provided as an elastic element (70) formed from an elastomer cord (71).

4. Cable duct according to either claim 2 or claim 3 wherein
the first cover part (40) comprises at least one first hook-like portion (42) when viewed in cross-section,
the second cover part (50) comprises at least one second hook-like portion (52) when viewed in cross-section, and
corresponding first and second hook-like portions (42, 52) can engage with each other so that the first and second cover parts (40, 50) are relatively slidably guided along a sliding axis (15) which is perpendicular to the longitudinal axis (11), wherein
when the cable duct (10) is closed the sliding axis is parallel to a transverse axis, the transverse axis perpendicularly joining the first and second pivot axes (31, 32).

5. Cable duct according to claim 4, wherein
at least one urging member (70) is arranged between a corresponding pair of first and second hook-like portions (42, 52).

6. Cable duct according to claim 5, wherein
a first or a second hook-like portion (52) comprises a third free end (53) which is configured to be thickened with respect to the rest of the respective hook-like portion (52), and
at least one urging member (70) rests on the third free end (53).

7. Cable duct according to any one of the preceding claims, wherein
one of the first and second cover parts (40, 50) comprises an impinging end (43), as a fourth free end, which engages with a holding recess (54) of the other of the first and second cover parts (40, 50), and
the holding recess (54) has a holding protrusion (55) and the impinging end (43) is configured to bear on the holding protrusion (55).

8. Cable duct according to claim 7, wherein
the hook-like portions (42, 52) are formed so that they limit the extent of relative sliding of the first and second cover parts (40, 50) in a first direction, and
the impinging end (43) and the holding recess (54) are formed so that they limit the extent of relative sliding of the first and second cover parts (40, 50) in a second direction opposite to the first direction.

9. Cable duct according to claim 7 or 8, wherein
when viewed in cross-section the holding recess (54) is provided with a step (56) in the region of the holding protrusion (55), said step (56) forming a first and a second restraining portion (57, 58),
the restraining portions (57, 58) are relatively offset with respect to a third axis (13), and
the impinging end (43) can be brought into engagement with the first restraining portion (57) and with the second restraining portion (58).

10. Cable duct according to claim 9, wherein
the hook-like portions (42, 52) can be brought into respective engagement only when the impinging end (43) lies on the second restraining portion (58) with the impinging end (43) preloaded.

11. Cable duct according to claim 10, wherein
the preload is at least partially released by relatively sliding the first and second cover parts (40, 50) so that the impinging end (43) is brought into engagement with the first restraining portion (57).

## Patentansprüche

1. Kabelkanal, ein Basiselement (20) und eine Abdeckung (30) umfassend, wobei
das Basiselement (20) eine Querschnittsform aufweist, wobei sich die Querschnittsform entlang einer Längsachse (11) erstreckt und ein erstes und ein zweites freies Ende (21, 22) ausbildet, die voneinander beabstandet sind, wobei das Basiselement einen konstanten Querschnitt senkrecht zur Längsachse aufweist,
die Abdeckung (30) am Basiselement (20) anbringbar ist, sodass der Kabelkanal im Querschnitt gesehen einen Aufnahmeraum (14) ausbildet,
die Abdeckung (30) einen ersten Eingriffsabschnitt (41), der dazu ausgelegt ist, in das erste freie Ende (21) einzugreifen, und einen zweiten Eingriffsabschnitt (51), der dazu ausgelegt ist, in das zweite freie Ende (22) einzugreifen, umfasst, und
die Abdeckung (30) Folgendes umfasst:
einen ersten Abdeckungsteil (40), auf dem der erste Eingriffsabschnitt (41) angeordnet ist; und
einen zweiten Abdeckungsteil (50), auf dem der zweite Eingriffsabschnitt (51) angeordnet ist, wobei der erste und zweite Abdeckungsteil überlagernd ineinander eingreifen, **dadurch gekennzeichnet, dass** die Abdeckung (30) mindestens ein Drückelement (70) umfasst, sodass die Abdeckung als mehrteilige Abdeckung mit einem getrennten Drückelement versehen ist, das den ersten und zweiten Abdeckungsteil (40, 50) zueinander drückt, wenn der erste Eingriffsabschnitt (41) in das erste freie Ende (21) eingreift oder damit in Eingriff gebracht wird und gleichzeitig der zweite Eingriffsabschnitt (51) in das zweite freie Ende (22) eingreift oder damit in Eingriff gebracht wird.

2. Kabelkanal nach Anspruch 1, wobei
der erste Eingriffsabschnitt (41) in das erste freie Ende (21) eingreifbar ist, sodass die Abdeckung (30) um eine erste Schwenkachse (31) verschwenkbar ist,
der zweite Eingriffsabschnitt (51) in das zweite freie Ende (22) eingreifbar ist, sodass die Abdeckung (30) um eine zweite Schwenkachse (32) verschwenkbar ist, und sich die erste und zweite Schwenkachse (31, 32) entlang der Längsachse (11) erstrecken.

3. Kabelkanal nach Anspruch 1 oder 2, wobei
das mindestens eine Drückelement (70) als elastisches Element (70) vorgesehen ist, das aus einem Elastomerseil (71) ausgebildet ist.

4. Kabelkanal nach Anspruch 2 oder Anspruch 3, wobei
der erste Abdeckungsteil (40) im Querschnitt gesehen mindestens einen ersten hakenförmigen Abschnitt (42) umfasst,
der zweite Abdeckungsteil (50) im Querschnitt gesehen mindestens einen zweiten hakenförmigen Abschnitt (52) umfasst und
der zugehörige erste und zweite hakenförmige Abschnitt (42, 52) ineinander eingreifen können, sodass der erste und zweite Abdeckungsteil (40, 50) entlang einer Verschiebungsachse (15), die senkrecht zur Längsachse (11) verläuft, relativ verschiebbar geführt werden, wobei
wenn der Kabelkanal (10) geschlossen ist, die Verschiebungsachse parallel zu einer Querachse ist, wobei die Querachse die erste und zweite Schwenkachse (31, 32) senkrecht verbindet.

5. Kabelkanal nach Anspruch 4, wobei
mindestens ein Drückelement (70) zwischen einem zugehörigen Paar aus einem ersten und zweiten hakenförmigen Abschnitt (42, 52) angeordnet ist.

6. Kabelkanal nach Anspruch 5, wobei
ein erster oder zweiter hakenförmiger Abschnitt (52) ein drittes freies Ende (53) umfasst, das dazu ausgelegt ist, in Bezug zum Rest des entsprechenden hakenförmigen Abschnitts (52) verstärkt zu sein, und
mindestens ein Drückelement (70) auf dem dritten freien Ende (53) aufliegt.

7. Kabelkanal nach einem der vorstehenden Ansprüche, wobei
einer des ersten und zweiten Abdeckungsteils (40, 50) ein Aufprallende (43) als viertes freies Ende umfasst, das in eine Halteaussparung (54) des anderen des ersten oder zweiten Abdeckungsteils (40, 50) eingreift, und
die Halteaussparung (54) einen Haltevorsprung (55) aufweist und das Aufprallende (43) dazu ausgelegt ist, auf dem Haltevorsprung (55) aufzuliegen.

8. Kabelkanal nach Anspruch 7, wobei
die hakenförmigen Abschnitte (42, 52) derart ausgebildet sind, dass sie das Ausmaß der relativen Verschiebung des ersten und zweiten Abdeckungsteils (40, 50) in eine erste Richtung begrenzen, und
das Aufprallende (43) und die Halteaussparung (54) derart ausgebildet sind, dass sie das Ausmaß der relativen Verschiebung des ersten und zweiten Abdeckungsteils (40, 50) in eine zweite Richtung, die der ersten Richtung entgegengesetzt ist, begrenzen.

9. Kabelkanal nach Anspruch 7 oder 8, wobei
die Halteaussparung (54) im Querschnitt gesehen mit einer Stufe (56) im Bereich des Haltevorsprungs (55) versehen ist, wobei die Stufe (56) einen ersten und einen zweiten Rückhalteabschnitt (57, 58) ausbildet,
die Rückhalteabschnitte (57, 58) in Bezug zu einer dritten Achse (13) versetzt sind und
das Aufprallende (43) mit dem ersten Rückhalteabschnitt (57) und dem zweiten Rückhalteabschnitt (58) in Eingriff gebracht werden kann.

10. Kabelkanal nach Anspruch 9, wobei
die hakenförmigen Abschnitte (42, 52) nur miteinander in Eingriff gebracht werden können, wenn das Aufprallende (43) auf dem zweiten Rückhalteabschnitt (58) liegt, wobei das Aufprallende (43) vorgespannt ist.

11. Kabelkanal nach Anspruch 10, wobei
die Vorspannung zumindest teilweise gelöst wird, indem der erste und zweite Abdeckungsteil (40, 50) zueinander verschoben werden, sodass das Aufprallende (43) mit dem ersten Rückhalteabschnitt (57) in Eingriff gebracht wird.

## Revendications

1. Conduite de câbles comprenant un organe de base (20) et un couvercle (30), dans laquelle
l'organe de base (20) a une forme en section transversale, la forme en section transversale s'étendant le long d'un axe longitudinal (11) et formant des première et deuxième extrémités libres (21, 22) espacées l'une de l'autre, l'organe de base ayant une section transversale constante perpendiculaire à l'axe longitudinal,
le couvercle (30) est attachable à l'organe de base (20) pour que la conduite de câbles forme un espace de réception (14) lorsqu'elle est vue en section transversale,
le couvercle (30) comprend une première portion d'entrée en prise (41) configurée pour entrer en prise avec la première extrémité libre (21), et une seconde portion d'entrée en prise (51) configurée pour entrer en prise avec la deuxième extrémité libre (22), et
le couvercle (30) comprend :
une première partie de couvercle (40) sur laquelle la première portion d'entrée en prise (41) est agencée ; et
une seconde partie de couvercle (50) sur laquelle la seconde portion d'entrée en prise (51) est agencée, les première et seconde parties de couvercle entrant en prise l'une avec l'autre en chevauchement, **caractérisée en ce que**
le couvercle (30) comprend au moins un organe de poussée (70), pour que le couvercle soit pourvu, sous forme de couvercle multi-pièce, d'un organe de poussée séparé, qui pousse les première et seconde parties de couvercle (40, 50) l'une par rapport à l'autre lorsque la première portion d'entrée en prise (41) est en prise ou mise en prise avec la première extrémité libre (21) et simultanément la seconde portion d'entrée en prise (51) est en prise ou mise en prise avec la deuxième extrémité libre (22).

2. Conduite de câbles selon la revendication 1, dans laquelle
la première portion d'entrée en prise (41) peut entrer en prise avec la première extrémité libre (21) pour que le couvercle (30) soit pivotable autour d'un premier axe de pivotement (31),
la seconde portion d'entrée en prise (51) peut entrer en prise avec la deuxième extrémité libre (22) pour que le couvercle (30) soit pivotable autour d'un deuxième axe de pivotement (32), et
les premier et deuxième axes de pivotement (31, 32) s'étendent le long de l'axe longitudinal (11).

3. Conduite de câbles selon la revendication 1 ou 2, dans laquelle
l'au moins un organe de poussée (70) est prévu sous forme d'élément élastique (70) formé à partir d'un cordon élastomère (71).

4. Conduite de câbles selon la revendication 2 ou la revendication 3, dans laquelle
le première partie de couvercle (40) comprend au moins une première portion de type crochet (42) lorsqu'elle est vue en section transversale,
la seconde partie de couvercle (50) comprend au moins une seconde portion de type crochet (52) lorsqu'elle est vue en section transversale, et
des première et seconde portions de type crochet correspondantes (42, 52) peuvent entrer en prise l'une avec l'autre pour que les première et seconde parties de couvercle (40, 50) soient guidées de façon relativement coulissante le long d'un axe de coulissement (15) qui est perpendiculaire à l'axe longitudinal (11), dans laquelle
lorsque la conduite de câbles (10) est fermée, l'axe de coulissement est parallèle à un axe transversal, l'axe transversal joignant perpendiculairement les premier et deuxième axes de pivotement (31, 32).

5. Conduite de câbles selon la revendication 4, dans laquelle
au moins un organe de poussée (70) est agencé entre une paire correspondante de première et seconde portions de type crochet (42, 52).

6. Conduite de câbles selon la revendication 5, dans laquelle
une première ou une seconde portion de type crochet (52) comprend une troisième extrémité libre (53) qui est configurée pour être épaissie par rapport au reste de la portion de type crochet respective (52), et
au moins un organe de poussée (70) repose sur la troisième extrémité libre (53).

7. Conduite de câbles selon l'une quelconque des revendications précédentes, dans laquelle
une des première et seconde parties de couvercle (40, 50) comprend une extrémité d'entrée en contact (43), en tant que quatrième extrémité libre, qui entre en prise avec un évidement de retenue (54) de l'autre des première et seconde parties de couvercle (40, 50), et
l'évidement de retenue (54) a une protubérance de retenue (55) et l'extrémité d'entrée en contact (43) est configurée pour prendre appui sur la protubérance de retenue (55).

8. Conduite de câbles selon la revendication 7, dans laquelle
les portions de type crochet (42, 52) sont formées pour qu'elles limitent l'étendue de coulissement relatif des première et seconde parties de couvercle (40, 50) dans une première direction, et
l'extrémité d'entrée en contact (43) et l'évidement de retenue (54) sont formés pour qu'ils limitent l'étendue de coulissement relatif des première et seconde parties de couvercle (40, 50) dans une seconde direction opposée à la première direction.

9. Conduite de câbles selon la revendication 7 ou 8, dans laquelle
lorsqu'il est vu en section transversale l'évidement de retenue (54) est pourvu d'un épaulement (56) dans la région de la protubérance de retenue (55), ledit épaulement (56) formant une première et une seconde portion d'arrêt (57, 58),
les portions d'arrêt (57, 58) sont relativement décalées par rapport à un troisième axe (13), et
l'extrémité d'entrée en contact (43) peut être mise en prise avec la première portion d'arrêt (57) et avec la seconde portion d'arrêt (58).

10. Conduite de câbles selon la revendication 9, dans laquelle
les portions de type crochet (42, 52) peuvent être mise en prise respective seulement lorsque l'extrémité d'entrée en contact (43) se trouve sur la seconde portion d'arrêt (58) avec l'extrémité d'entrée en contact (43) préchargée.

11. Conduite de câbles selon la revendication 10, dans laquelle
la précharge est au moins partiellement relâchée en faisant coulisser relativement les première et seconde parties de couvercle (40, 50) pour que l'extrémité d'entrée en contact (43) soit mise en prise avec la première portion d'arrêt (57).
